(19) Europäisches Patentamt
European Patent Office
Office européen des brevets

(11) **EP 3 599 456 B1**

(12) **EUROPEAN PATENT SPECIFICATION**

(45) Date of publication and mention
of the grant of the patent:
**11.06.2025 Bulletin 2025/24**

(21) Application number: **17903556.3**

(22) Date of filing: **26.12.2017**

(51) International Patent Classification (IPC):
**G01N 15/1404** *(2024.01)*    **G01N 15/14** *(2024.01)*
**G01N 15/10** *(2024.01)*

(52) Cooperative Patent Classification (CPC):
**G01N 15/1404; G01N 15/14; G01N 15/1459;
G01N 15/1484;** G01N 15/149; G01N 2015/1028

(86) International application number:
**PCT/JP2017/046685**

(87) International publication number:
**WO 2018/179647 (04.10.2018 Gazette 2018/40)**

(54) **CHANNEL UNIT AND MICROPARTICLE ANALYSIS DEVICE**

**KANALEINHEIT UND MIKROPARTIKELANALYSEVORRICHTUNG**

**UNITÉ DE CANAL ET DISPOSITIF D'ANALYSE DE MICROPARTICULES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2017 JP 2017071800**

(43) Date of publication of application:
**29.01.2020 Bulletin 2020/05**

(73) Proprietor: **Sony Group Corporation
Tokyo 108-0075 (JP)**

(72) Inventors:
• **TASHIRO Shinji
Tokyo 108-0075 (JP)**
• **ITO Tatsumi
Tokyo 108-0075 (JP)**

(74) Representative: **D Young & Co LLP
3 Noble Street
London EC2V 7BQ (GB)**

(56) References cited:
EP-A1- 2 784 151    EP-A2- 0 046 345
WO-A1-2016/210077   JP-A- 2004 239 697
JP-A- 2007 144 026  JP-A- 2009 518 604
JP-A- 2009 529 678  JP-A- 2010 175 441
JP-A- 2012 251 881  JP-A- H06 221 988
JP-A- H08 297 121   JP-B2- 4 594 810
US-A1- 2007 125 436 US-A1- 2016 266 025
US-A1- 2016 377 524

**Description**

TECHNICAL FIELD

The present technology relates to a flow channel unit and a microparticle analysis device. More specifically, the present invention relates to a flow channel unit including a flow rate fluctuation suppressing unit, and a microparticle analysis device including the flow channel unit.

BACKGROUND ART

Various kinds of devices have been developed so far in order to sort and/or analyze microparticles. Examples of such devices include flow cytometry. In the flow cytometry, microparticles to be analyzed are made to flow in a state of being aligned in fluid, and the microparticles are analyzed and/or sorted by detecting fluorescence and/or scattered light emitted by irradiating the microparticles with light such as laser light. Furthermore, in a microparticle sorting system used in the flow cytometry, a laminar flow that includes sample liquid containing cells and sheath liquid is discharged from an orifice formed in a flow cell or a microchip. When the laminar flow is discharged, predetermined vibration is applied to the laminar flow to form droplets. A moving direction of the formed droplets is electrically controlled depending on whether or not a target microparticle is contained, and the target microparticle is sorted.

Various improvements have been made to components of a flow cytometer, and improvements have been also made on a liquid feeding system that is one of the components. For example, Patent Document 1 below discloses "a sample liquid feeding device including: a first cylinder where a sample tube is disposed; a second cylinder that moves the first cylinder between a first position where the sample tube can be disposed and a second position where a sample contained in the sample tube can be fed; and a sealing portion that can cover the sample tube disposed in the first cylinder located at the second position, in which the first cylinder pressurizes an internal space of the sealing portion at the second position" (Claim 1). According to the liquid feeding device, the sample can be safely and easily fed (paragraph [0010]).

Furthermore, Patent Document 2 below discloses "a sample liquid feeding device including: a light irradiation unit that performs irradiation with light; a light detection unit that detects the light; and a tube holder that includes a light shielding unit portion that shields the light emitted to a side surface of a housed sample tube, and a pair of light transmitting portions through which the light can pass" (Claim 1). According to the liquid feeding device, the sample can be accurately and easily fed (paragraph [0010]).

CITATION LIST

PATENT DOCUMENT

Patent Document 1: Japanese Patent Application Laid-Open No. 2013-238574
Patent Document 2: Japanese Patent Application Laid-Open No. 2013-242156
JP 2009 518604 A (and its family member US 2007/0125436 A1 define a pulsation attenuator for a fluidic system with a fluidic pump.
WO 2016/210077 A1 relates to systems, apparatus and methods for flow cytometry and fluorescent activated cell sorting.

SUMMARY OF THE INVENTION

PROBLEMS TO BE SOLVED BY THE INVENTION

In flow cytometry, since a measurement time for a signal emitted from a microparticle is in the order of $\mu$ seconds, it is required to form an extremely stable flow inside a flow channel. Since it is known that a method of feeding liquid by pressurizing the air can generate an extremely stable flow, the method is often used in the flow cytometry. However, to perform such a pressure liquid feeding, it is necessary to have components such as a compressor and a pressure vessel, and this leads to size increase of a device and cost increase. Furthermore, since the air contacts the liquid in the pressure liquid feeding, the air used in the pressurization is required to be sterilized in a case of securing sterility, and extremely high cost and labor are involved.

As a pump that can easily secure the sterility, a tube pump, a syringe pump, and a centrifugal pump can be exemplified. However, in a case of performing the liquid feeding by using these pumps, a high frequency pulsating flow is generated.

The present technology is directed to providing a new technology to form a stable flow inside a flow channel.

SOLUTIONS TO PROBLEMS

The present inventors have found out that the above-described problem could be solved by adopting a specific configuration inside the flow channel.

In other words, the present technology provides a flow channel unit according to claim 1.

The flow channel unit of the present technology can probably include a pump on an upstream side of the flow rate fluctuation suppressing unit.

In the flow channel unit of the present technology, the flow rate fluctuation suppressing unit can probably include a gas and suppress flow rate fluctuation by compression or expansion of the gas.

In the flow channel unit of the present technology, the cross-sectional area of the at least part of the flow channel in the downstream flow channel can probably be 1/10 times or less the cross-sectional area of the remaining part of the flow channel.

In the flow channel unit of the present technology, a cross-section of the at least part of the flow channel in the downstream flow channel and a cross-section of the remaining part of the flow channel in the downstream flow channel can probably be circular or elliptical.

In the flow channel unit of the present technology, the cross-section of the at least part of the flow channel in the downstream flow channel and the cross-section of the remaining part of the flow channel in the downstream flow channel can probably be circular, and the cross-sectional area of the at least part of the flow channel can probably be 1/10 times or less the cross-sectional area of the remaining part.

In the flow channel unit of the present technology, the cross-section of the remaining part of the flow channel in the downstream flow channel can probably be circular, and a tube diameter of the flow channel can probably be 5 mm or less.

In the flow channel unit of the present technology, the pump can probably be a tube pump, a syringe pump, or a centrifugal pump.

In the flow channel unit of the present technology, the at least part of the downstream flow channel and the remaining part of the downstream flow channel may be connected by a connector.

In the flow channel unit of the present technology, the at least part of the downstream flow channel can probably be molded from a member having pressure resistance.

The flow channel unit of the present technology can probably be used in order to allow liquid to flow through a microparticle analysis device.

In the flow channel unit of the present technology, the liquid flowing inside the flow channel can probably form a laminar flow containing a microparticle to be analyzed.

Furthermore, the present technology also provides a microparticle analysis device including a flow channel unit according to claim 1.

EFFECTS OF THE INVENTION

According to the present technology, a stable flow can be formed inside the flow channel. Note that effects provided by the present technology are not necessarily limited to the effect recited herein and may include any effect recited in the present specification.

BRIEF DESCRIPTION OF DRAWINGS

Fig. 1 is a schematic diagram of a flow channel including a flow channel unit of the present technology.
Fig. 2 is a diagram illustrating an experimental system to analyze flow rate fluctuation that occurs in a case of pressure liquid feeding.
Fig. 3 is a diagram illustrating a waveform of a measured flow rate.
Fig. 4 is a diagram illustrating an experimental system to analyze flow rate fluctuation caused in liquid feeding by a tube pump.
Fig. 5 is a diagram illustrating a waveform of a flow rate in a case of liquid feeding by a large tube pump.
Fig. 6 is a diagram illustrating a waveform of a flow rate in a case of liquid feeding by a small tube pump.
Fig. 7 illustrates an experimental system of Comparative Example 2.
Fig. 8 illustrates a waveform of a flow rate in each of cases where a length of a silicone tube is set to 15 cm, 25 cm, 50 cm, or 100 cm.
Fig. 9 is a diagram illustrating an experimental system of Example 1.

Fig. 10 is a diagram illustrating a waveform of a flow rate measured in the experimental system of Example 1.
Fig. 11 is a diagram illustrating equivalent circuit diagrams.
Fig. 12 is a diagram illustrating simulation results from the equivalent circuits.
Fig. 13 is a diagram illustrating equivalent circuit diagrams.
Fig. 14 is a diagram illustrating simulation results from the equivalent circuits.
Fig. 15 is a schematic diagram of a microchip used to sort a target microparticle.

MODE FOR CARRYING OUT THE INVENTION

In the following, a preferable mode to carry out the present technology will be described. Note that embodiments described below illustrate representative embodiments of the present technology and the scope of the present technology should not be interpreted to be limited by these embodiments. Note that the description will be provided in the following order.

1. First Embodiment (Flow Channel Unit)
2. Second Embodiment (Microparticle Analysis Device)
3. Examples

1. First Embodiment (Flow Channel Unit)

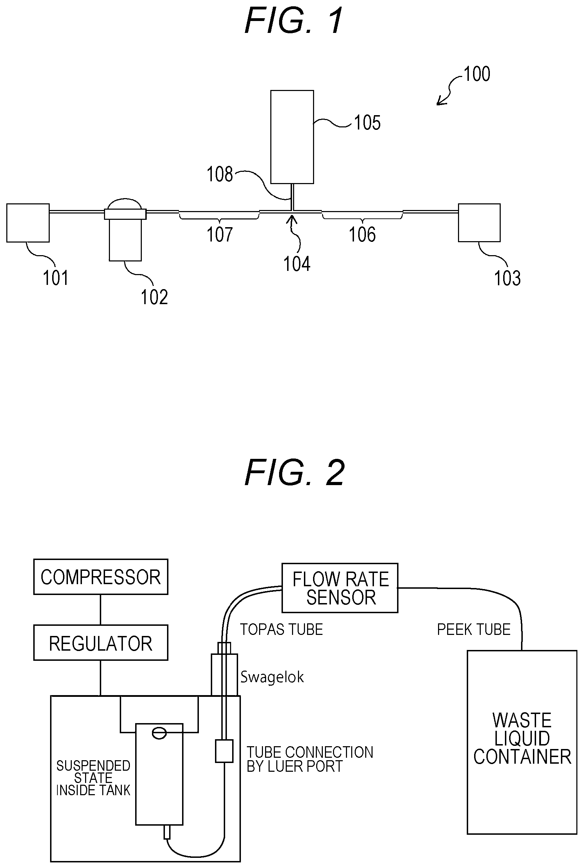

A flow channel unit of the present technology includes a flow rate fluctuation suppressing unit, and the cross-sectional area of at least part of a downstream flow channel of the flow rate fluctuation suppressing unit is smaller than the cross-sectional area of a remaining part of the flow channel. Since the cross-sectional area of the at least part of the downstream flow channel is smaller than the cross-sectional area of the remaining part, an action to suppress flow rate fluctuation by the flow rate fluctuation suppressing unit is enhanced, and generation of a pulsating flow can be suppressed. As a result, stable liquid feeding can be performed. In the present technology, the cross-sectional area represents the traverse sectional area of the flow channel. In other words, in the present technology, the cross-sectional area represents the area inside the flow channel when the flow channel is cut perpendicularly to an advancing direction of a liquid flow.
The suppression of the pulsating flow generation can be particularly significantly confirmed in a case of liquid feeding using a pump. Generally, the pulsating flow occurs in such liquid feeding using a pump. Exemplary techniques to remove the pulsating flow include: a method of suppressing fluctuation by increasing a drive rotation speed of the pump, a method of flattening pulsation by combining two or more pumps in an opposite phase; and a removal method using an accumulator. With these techniques, a pulsating flow reducing effect can be obtained to some degree. However, looking at changes in a flow rate at sampling intervals in the order of several milliseconds, the pulsating flow cannot be completely removed by these techniques. In flow cytometry, since a measurement time of a signal emitted from a microparticle is in the order of μ seconds as described above, these techniques are not sufficient to completely remove the pulsating flow. According to the flow channel unit of the present technology, a stable flow suitable for the flow cytometry can probably be formed even in the liquid feeding using a pump. Furthermore, according to the present technology, it is possible to remove the pulsating flow by adopting a specific configuration in a downstream flow channel of the pump without changing the pump itself. Moreover, according to the present technology, downsizing and cost reduction of a device such as a flow cytometer can probably be achieved because a compressor and a pressure vessel required in pressure liquid feeding are not necessary.
The flow channel unit of the present technology will be described below referring to Fig. 1. Fig. 1 illustrates an example of a flow channel 100 including a flow channel unit of the present technology. The flow channel 100 includes a container 101 that contains liquid, and the liquid is supplied from the container 101. The liquid is fed toward a device 103 by a pump 102. The flow channel 100 further includes a branch point 104 and is connected to a flow rate fluctuation suppressing unit 105 via a branched flow channel 108. A downstream flow channel of the flow rate fluctuation suppressing unit 105 includes a portion 106 having the cross-sectional area of the flow channel smaller than the cross-sectional area of a remaining part. In other words, the cross-sectional area of the portion 106 of the downstream flow channel of the flow rate fluctuation suppressing unit 105 is smaller than the cross-sectional area of the remaining part of the flow channel. Since the cross-sectional area of the portion 106 of the downstream flow channel of the flow rate fluctuation suppressing unit 105 is made smaller than the cross-sectional area of the remaining part, it is possible to enhance a pulsating flow eliminating action performed by the flow rate fluctuation suppressing unit for the pulsating flow generated at the time of the liquid feeding by the pump 102. Particularly, with this configuration, an action to eliminate not only a low-frequency pulsating flow but also a high-frequency pulsating flow can probably be enhanced.
In the flow channel unit of the present technology, the cross-sectional area of at least a part 107 of an upstream flow channel of the flow rate fluctuation suppressing unit 105 can probably be smaller than the cross-sectional area of a remaining part of the flow channel. Preferably, the at least part 107 of the upstream flow channel can probably be provided on a downstream side of the pump. For example, in the flow channel 100 of Fig. 1, the at least part 107 of the upstream flow channel can probably be provided between the pump 102 and the flow rate fluctuation suppressing unit 105. In other words, the at least part on the upstream flow channel can probably be located on an upstream side of the flow rate fluctuation suppressing unit and the downstream side of the pump. Since the flow channel having the small cross-sectional area is provided in the upstream flow channel of the flow rate fluctuation suppressing unit in this manner, generation of the pulsating flow is further suppressed and, particularly, generation of the pulsating flow having a high frequency can probably be suppressed.

The flow channel unit of the present technology can probably include a pump on an upstream side of the flow rate fluctuation suppressing unit. The liquid can probably be fed by the pump. Furthermore, a pulsating flow generated at the time of the liquid feeding by the pump can probably be suppressed by the present technology. The pump can probably be, for example, a tube pump, a syringe pump, or a centrifugal pump, but is not limited thereto. To achieve more stable liquid feeding, preferably, the pump is a tube pump or a syringe pump, and more preferably a tube pump.

In the flow channel unit of the present technology, preferably, the cross-sectional area of the at least part of the flow channel in the downstream flow channel can probably be 1/5 times or less, more preferably 1/10 times or less, still more preferably 1/12 times or less, and even more preferably 1/15 times or less the cross-sectional area of the remaining part of the downstream flow channel. With adoption of such a cross-sectional area of the flow channel, the generation of the pulsating flow can probably be suppressed more effectively.

Furthermore, in the flow channel unit of the present technology, preferably, the cross-sectional area of the at least part of the flow channel in the upstream flow channel can probably be 1/5 times or less, more preferably 1/10 times or less, still more preferably 1/12 times or less, and even more preferably 1/15 times or less the cross-sectional area of the remaining part in the upstream flow channel. With adoption of such a cross-sectional area of the flow channel, the generation of the pulsating flow can probably be further effectively suppressed.

In the flow channel unit of the present technology, a cross-sectional shape of the flow channel may be selected as appropriate by those skilled in the art, but can probably be, for example, circular or elliptical.

In the present technology, preferably, a cross-section of the at least part of the downstream flow channel can probably be circular or elliptical, more preferably, circular. Furthermore, preferably, a cross-section of the remaining part of the downstream flow channel can probably be circular or elliptical, preferably, circular. In the present technology, the circular shape includes a substantially circle and a perfect circle.

Furthermore, in the present technology, preferably, a cross-section of the at least part of the upstream flow channel can probably be circular or elliptical, more preferably, circular. Furthermore, preferably, the cross-section of the remaining part of the upstream flow channel can probably be circular or elliptical, preferably, circular.

In a case where the cross-section of the at least part of the downstream flow channel and the cross-section of the remaining part in the downstream flow channel are both circular, preferably, a flow channel inner diameter of the at least part can probably be 1/2 times or less, more preferably 1/3 times or less, and still more preferably 1/4 times or less a flow channel inner diameter of the remaining part.

Furthermore, in a case where the cross-section of the at least part of the upstream flow channel and the cross-section of the remaining part of the upstream flow channel are both circular, preferably, a flow channel inner diameter of the at least part can probably be 1/2 times or less, more preferably 1/3 times or less, and still more preferably 1/4 times or less a flow channel inner diameter of the remaining part.

In the present technology, the cross-sectional shape of the at least part of the downstream flow channel and the cross-sectional shape of the at least part of the upstream flow channel may be the same or different. In the present technology, for example, the cross-section of the at least part of the downstream flow channel and the cross-section of the at least part of the upstream flow channel may be both circular and have the same inner diameter, or may be both circular but have different inner diameters.

In a particularly preferable embodiment of the present technology, the cross-section of the at least part of the flow channel in the downstream flow channel and the cross-section of the remaining part in the downstream flow channel can probably be circular, and the cross-sectional area of the at least part of the flow channel can probably be 1/10 times or less the cross-sectional area of the remaining part. With this configuration, the generation of the pulsating flow can probably be suppressed.

Furthermore, in a particularly preferable embodiment of the present technology, the cross-section of the at least part of the flow channel in the upstream flow channel and the cross-section of the remaining part in the upstream flow channel can probably be circular, and the cross-sectional area of the at least part of the flow channel can probably be 1/10 times or less the cross-sectional area of the remaining part. With this configuration, the generation of the pulsating flow having a high-frequency can probably be suppressed.

In one embodiment of the present technology, in a case where the cross-section of the remaining part of the flow channel in the downstream flow channel is circular, a tube diameter of the flow channel may be determined as appropriate by those skilled in the art in accordance with various conditions such as a type of a device to be supplied with liquid, but for example, the tube diameter can probably be 5 mm or less, preferably 4 mm or less, and still more preferably 3 mm or less. A

EP 3 599 456 B1

lower limit value of the tube diameter of the flow channel can probably be, for example, 0.1 mm, preferably 0.3 mm, and more preferably 0.5 mm.

In a case where the cross-section of the at least part of the flow channel in the downstream flow channel is circular, the tube diameter of the flow channel can probably be, for example, 2 mm or less, preferably 1 mm or less, and still more preferably 0.5 mm or less. A lower limit value of the flow channel can probably be, for example, 50 $\mu$m, preferably 100 $\mu$m, and still more preferably 150 $\mu$m.

In one embodiment of the present technology, in a case where the cross-section of the remaining part of the flow channel in the upstream flow channel is circular, a tube diameter of the flow channel may be determined as appropriate by those skilled in the art in accordance with the various conditions such as the type of the device to be supplied with liquid, but for example, the diameter can probably be 5 mm or less, preferably 4 mm or less, and still more preferably 3 mm or less. A lower limit value of the tube diameter of the flow channel can probably be, for example, 0.1 mm, preferably 0.3 mm, and more preferably 0.5 mm.

In a case where the cross-section of the at least part of the flow channel in the upstream flow channel is circular, a tube diameter of the flow channel can probably be, for example, 2 mm or less, preferably 1 mm or less, and still more preferably 0.5 mm or less. A lower limit value of the flow channel can probably be, for example, 50 $\mu$m, preferably 100 $\mu$m, and still more preferably 150 $\mu$m.

In one embodiment of the present technology, a flow channel length of the at least part of the downstream flow channel can probably be, for example, 5 cm to 100 cm, preferably 10 cm to 80 cm, more preferably 15 cm to 60 cm, and still more preferably 20 to 50 cm. With adoption of such a length, an action to suppress the pulsating flow can probably be exerted more efficiently.

Furthermore, a flow channel length of the at least part of the upstream flow channel can probably be, for example, 5 cm to 100 cm, preferably 10 cm to 80 cm, more preferably 15 cm to 60 cm, and still more preferably 20 to 50 cm. With adoption of such a length, an action to suppress the pulsating flow can probably be exerted more efficiently.

In one embodiment of the present technology, an end included in the at least part of the downstream flow channel and located on the side of the flow rate fluctuation suppressing unit can probably be, for example, 100 cm or less, preferably 80 cm or less, more preferably 60 cm or less, still more preferably 40 cm or less from the flow rate fluctuation suppressing unit or from the branch point. With this configuration, the action to suppress the pulsating flow can probably be exerted more efficiently.

Furthermore, an end included in the at least part of the upstream flow channel and located on the side of the flow rate fluctuation suppressing unit can probably be, for example, 100 cm or less, preferably 80 cm or less, more preferably 60 cm or less, still more preferably 40 cm or less from the flow rate fluctuation suppressing unit or from the branch point. With this configuration, the action to suppress the pulsating flow can probably be exerted more efficiently.

In the flow channel unit of the present technology, the flow rate fluctuation suppressing unit can probably include a gas and suppress flow rate fluctuation by compression or expansion of the gas. An example of a simple flow rate fluctuation suppressing unit can probably be the branched flow channel itself as illustrated in Fig. 1 and a gas such as the air or nitrogen gas can probably be included in the branched flow channel. The action to suppress the flow fluctuation can probably be enhanced by further increasing a length of the branched flow channel including the gas, in other words, by further increasing a volume of the gas. A value of the volume of the gas may be determined as appropriate by those skilled in the art, and for example, a value calculated by a pulsation absorption calculation formula described in Examples below or a value larger than the value can probably be adopted.

In a preferred embodiment of the present technology, preferably, the flow rate fluctuation suppressing unit can probably be a syringe or an accumulator. With adoption of the syringe or the accumulator as the flow rate fluctuation suppressing unit, the flow rate fluctuation can probably be suppressed more efficiently. A type of the syringe or the accumulator can probably be selected as appropriate by those skilled in the art in accordance with various conditions such as a size and/or a flow rate of a flow channel of the flow channel unit of the present technology. The syringe or the accumulator as the flow rate fluctuation suppressing unit can probably be connected to, for example, the branched flow channel as illustrated in Fig. 1. The syringe can probably be, for example, a common injector manufactured from plastic, glass, or metal. To make the syringe act as the flow rate fluctuation suppressing unit, the syringe can probably be connected to the branched flow channel in a state that a cylinder portion thereof is filled with the air. The accumulator can probably be a device in which a bladder such as a rubber-made bladder enclosed with a gas such as a nitrogen gas is included inside a rigid container such as a metal container. A type of the accumulator can probably be selected as appropriate by those skilled in the art in accordance with the various conditions such as the size and/or the flow rate of the flow channel of the flow channel unit of the present technology.

In the flow channel unit of the present technology, the at least part of the downstream flow channel may be connected to the remaining part of the downstream flow channel by a connector. Furthermore, the at least part of the upstream flow channel may be connected to the remaining part of the upstream flow channel by a connector. Since there is a case where changing the cross-sectional area of one flow channel in a middle thereof is technically difficult, the cross-sectional area can probably be easily changed by adopting the connector. For example, a connector commonly used to connect two tubes in this technical field can probably be adopted. A type of the connector can probably be selected as appropriate by those skilled in the art in accordance with a size of a flow channel to be connected.

In the flow channel unit of the present technology, the at least part of the downstream flow channel and/or the at least part of the upstream flow channel can probably be molded from a member having pressure resistance. A high pressure is applied to the cross-sectional areas of these at least parts of the flow channels because the cross-sectional areas are smaller than those of the remaining parts. Therefore, since these at least parts of the flow channels are molded from the member having the pressure resistance, the flow channel can probably be prevented from being damaged. The member having the pressure resistance may be, for example, resin, metal, or rubber, and can probably be selected as appropriate by those skilled in the art. Examples of the member having the pressure resistance can include polyether ether ketone (PEEK), polytetrafluoroethylene (PTFE), an ethylene-tetrafluoroethylene copolymer (ETFE), or stainless steel (SUS), but not limited thereto.

In one embodiment of the present technology, the flow channel unit of the present technology can be used to allow the liquid to flow through a microparticle analysis device. Since stable liquid feeding is required in the microparticle analysis device, liquid feeding having the generation of the pulsating flow suppressed, which is provided by the flow channel unit of the present technology, is suitable to allow the liquid to flow through the microparticle analysis device Examples of the microparticle analysis device can include a flow cytometer and a cell sorter, but not limited thereto.

In one embodiment of the present technology, the liquid flowing inside the flow channel of the flow channel unit of the present technology can probably form a laminar flow containing a microparticle to be analyzed. The stable liquid feeding achieved by the flow channel unit of the present technology is suitable to form the laminar flow. For example, in a case where a device to which the liquid having the pulsating flow suppressed is supplied by the flow channel unit of the present technology is a flow cytometer, for example, sheath liquid or sample liquid, preferably, the sheath liquid can probably be supplied by the flow channel unit.

2. Second Embodiment (Microparticle Analysis Device)

The present technology also provides a microparticle analysis device including a flow channel unit that includes a flow rate fluctuation suppressing unit, in which the cross-sectional area of at least part of a downstream flow channel of the flow rate fluctuation suppressing unit is smaller than the cross-sectional area of a remaining part of the flow channel. Since the flow channel unit is a flow channel unit described in above "1. First Embodiment", a description of the flow channel unit will be omitted.

In the microparticle analysis device of the present technology, the flow channel unit can probably be used to supply liquid to the device. The microparticle analysis device of the present technology can probably be, for example, a device that is required to suppress flow rate fluctuation of the liquid flowing inside the device. The microparticle analysis device of the present technology is, for example, a flow cytometer, but not limited thereto.

In a case where the device is, for example, the flow cytometer, the flow channel unit can probably be used to supply the liquid to form a laminar flow in the flow cytometer. A position inside the device where the flow channel unit is installed can probably be determined as appropriate by those skilled in the art so as to provide effects of the present invention. For example, in the flow cytometer, the flow channel unit can probably be connected to a flow channel through which sheath liquid and/or sample liquid flows. With this configuration, stable supply of the sheath liquid and/or the sample liquid can probably be performed.

As a microparticle analysis device other than the flow cytometer, for example, a device that sorts a target microparticle inside a microchip can be exemplified. In this device, unlike the flow cytometer, the target microparticle is sorted inside the microchip without forming droplets. The microchip can probably include, for example, a main flow channel through which liquid containing a microparticle is made to flow, a microparticle suction flow channel coaxial with the main flow channel, and a branched flow channel branched from the main flow channel. In the microchip, in a case where the liquid flowing in the main flow channel does not contain any target microparticle, the liquid flows to, for example, the branched flow channel, and in a case where the liquid flowing in the main flow channel contains the target microparticle, the target microparticle is collected by the liquid being guided into a particle sorting flow channel. An example of the microphone chip includes the one disclosed in Japanese Patent Application Laid-Open No. 2012-127922 or 2014-36604.

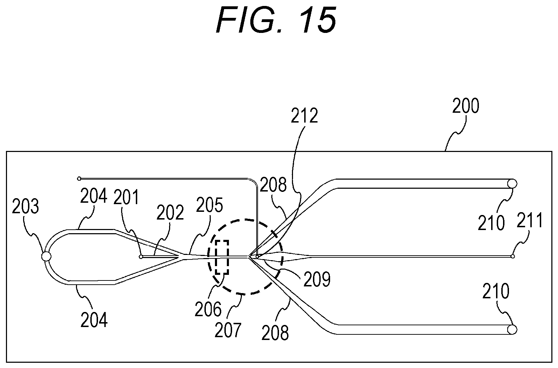

An example of the microchip will be described below referring to Fig. 15.

As illustrated in Fig. 15, a microchip 200 is provided with a sample liquid inlet 201 and a sheath liquid inlet 203. The sample liquid and the sheath liquid are respectively introduced into a sample liquid flow channel 202 and a sheath liquid flow channel 204 from these inlets. The sample liquid includes microparticles. The sheath liquid flowing in the sheath liquid introduction flow channel 204 joins the sample liquid flowing in the sample liquid flow channel 202 to form a laminar flow in which a periphery of the sample liquid is surrounded or sandwiched by the sheath liquid. The laminar flow flows toward a sorting unit 207 in the main flow channel 205. The sorting unit 207 includes a detection region 206. In the detection region 206, the microparticles flowing in the main flow channel 205 are irradiated with light, and whether or not to collect a microparticle can probably be determined by scattered light and/or fluorescence generated as a result of the light irradiation.

In the sorting unit 207, in a case where there is no particle to be collected is contained in the laminar flow, the laminar flow having flown in the main flow channel 205 flows toward a branched flow channel 208 and is discharged from a branched flow channel end 210. In a case where the particle to be collected is flowing, a flow toward the particle sorting flow channel 209 is formed in the branched portion 207, and the particle is collected. The collected particle is discharged from a particle sorting flow channel end 211 to the outside of the microchip 200. When the particle is sucked into the particle sorting flow channel 209, the sample liquid constituting the laminar flow or the sample liquid and the sheath liquid constituting the laminar flow can probably flow toward the particle sorting flow channel. A pressure chamber may be in communication with the particle sorting flow channel 209. The pressure chamber may be provided in the particle sorting flow channel 209, or the particle sorting flow channel itself may function as a pressure chamber. A pressure inside the pressure chamber can probably be reduced or increased. The microparticle is guided into the particle sorting flow channel 209 by reducing the pressure inside the pressure chamber, or the microparticle is prevented from entering the particle sorting flow channel 209 by increasing or keeping the pressure inside the pressure chamber.

A gate flow inlet 212 may be provided in order to prevent a particle not to be collected from entering the particle sorting flow channel 209. Since the sheath liquid is introduced from the gate flow inlet 212 and a flow in the direction from the particle sorting flow channel 209 to the main flow channel 205 is formed, the particle not to be collected can be prevented from entering the particle sorting flow channel 209.

Thus, the microparticle is sorted inside the microchip 200.

A laminar flow flows in the main flow channel inside the microchip, the laminar flow including the sample liquid containing the microparticles, and the sheath liquid surrounding or sandwiching the periphery of the sample liquid. For example, the flow channel unit can probably be connected to a flow channel that supplies the sheath liquid and/or the sample liquid. With this configuration, stable supply of the sheath liquid and/or the sample liquid can probably be performed.

The microparticle analysis device of the present technology can probably include a light irradiation unit that irradiates, with light, a microparticle flowing through the inside of a flow channel, a detection unit that detects scattered light and/or fluorescence emitted from the microparticle, and an analysis unit that analyzes the microparticle on the basis of data detected by the detection unit. Furthermore, the microparticle analysis device of the present technology can probably further include a sorting unit that sorts a microparticle in accordance with the analysis result. As examples of the device including such components, for example, a flow cytometer and a device that sorts a target microparticle inside the above-described microchip can be included. In the following, the light irradiation unit, the detection unit, the analysis unit, and the sorting unit will be described.

In the present technology, the light irradiation unit irradiates, with light (excitation light), a microparticle flowing through a flow channel. The flow channel unit of the present technology can probably be used to supply liquid that allows a microparticle to flow through. The light irradiation unit can probably include a light source that emits the excitation light, and an objective lens that condenses the excitation light on the microparticle. The light source can probably be selected as appropriate in accordance with a purpose of analysis from among a laser diode, an SHG laser, a solid-state laser, a gas laser, a high-luminance LED, and the like. The light irradiation unit may include another optical element as necessary in addition to the light source and the objective lens.

In the case where the microparticle analysis device of the present technology is the flow cytometer, the light irradiation unit can probably irradiate the laminar flow with the light immediately before the laminar flow is discharged from an orifice, for example.

In a case where the microparticle analysis device of the present technology is a device that sorts a target microparticle inside the microchip, the light irradiation unit can probably irradiate, with the light, the laminar flow flowing inside the main flow channel, for example. The irradiation can probably be performed, for example, in the detection region 206 illustrated in Fig. 15.

In the present technology, the detection unit detects the scattered light and/or the fluorescence emitted from the microparticle by the irradiation with the light by the light irradiation unit. The detection unit can probably include a condenser lens that condenses the fluorescence and/or the scattered light emitted from a microparticle and a detector. As the detector, a PMT, a photodiode, a CCD, a CMOS, or the like can probably be used, but not limited thereto. The detection unit may include another optical element as needed in addition to the condenser lens and the detector.

The fluorescence detected by the detection unit can probably include, for example, fluorescence generated the microparticle itself, and fluorescence generated from a substance labeled in the microparticle, such as a fluorescent substance, but not limited thereto. The scattered light detected by the detection unit can probably include forward scattered light, side scattered light, Rayleigh scatter, and/or Mie scatter, but not limited thereto.

In the present technology, the analysis unit analyzes a characteristic of a microparticle on the basis of data detected by the detection unit. The fluorescence and the scattered light detected by the detection unit can probably be converted into an electrical signal. In other words, a microparticle sorting device of the present technology can probably include an electrical signal conversion unit. The electrical signal conversion unit may be included in the analysis unit or may not be necessarily included in the analysis unit. The analysis unit can probably receive an optical electrical signal and determine an optical characteristic of the microparticle on the based on the electrical signal.

In the present technology, the sorting unit executes sorting of a microparticle based on a characteristic of the microparticle analyzed by the analysis unit.

In the case where the microparticle analysis device of the present technology is the flow cytometer, the sorting unit may be a sorting unit used in general flow cytometry. The sorting unit can probably form, for example, a droplet including one microparticle that is flowing through, and apply predetermined electric charge to the droplet on the basis of the optical characteristic determined in the analysis unit. The sorting unit can probably sort the microparticle by controlling an advancing direction of the droplet on the basis of the applied electric charge.

In the case where the microparticle analysis device of the present technology is the device that sorts a target microparticle inside the microchip, the sorting unit may be, for example, the sorting unit 207 and the particle sorting flow channel 209 that controls the advancing direction of the microparticle in the sorting unit 207 as illustrated in Fig. 15. The sorting unit can probably control the pressure inside the particle sorting flow channel 209 or the pressure inside the pressure chamber provided in the particle sorting flow channel 209 on the basis of the optical characteristic determined in the analysis unit. The sorting unit can probably sort the microparticle by controlling the advancing direction of the microparticles by controlling the pressure.

[Examples]

3. Examples

3-1. Reference Example 1 (Pressure Liquid Feeding)

Since it is known that a method of feeding liquid by pressurizing the air can generate an extremely stable flow, the method is often used in the flow cytometry. Therefore, at first, flow rate fluctuation that occurs in the case of the pressure liquid feeding was analyzed.

Fig. 2 illustrates an experimental system to analyze the flow rate fluctuation that occurs in the case of the pressure liquid feeding. A flow rate sensor used in the experimental system was SLS-1500 manufactured by SENSIRION AG. The shortest interval of flow rate sampling was 1 ms. In other words, the flow rate was measured every 1 ms at the shortest.

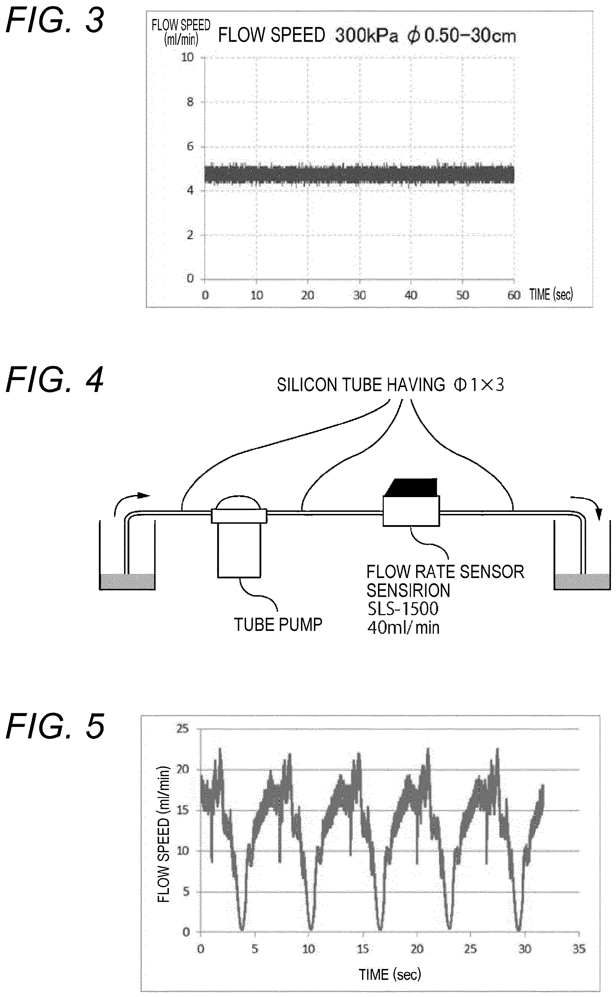

In the above-described experimental system, the pressure liquid feeding was performed. Fig. 3 illustrates a waveform of the measured flow rate. As illustrated in the waveform, no pulsating flow was generated in the pressure liquid feeding.

An average value of the flow rate for 60 seconds, a coefficient of variation (CV), a flow rate maximum value - a flow rate minimum (Max - Min), and a fluctuation value relative to the average flow rate in the case where the pressure liquid feeding was performed in the above experimental system were respectively calculated. Obtained results are provided in Table 1 below (evaluation results on the pulsating flow caused by the pressure liquid feeding).

[Table 1]

|  |  | 100kPa | 200kPa | 300kPa |
|---|---|---|---|---|
| Average |  | 2.471407 | 4.738023 | 6.651085 |
| CV |  | 3.240423 | 3.050653 | 3.210637 |
| Max-Min | Max(1%) | 2.644 | 5.138 | 7.196 |
|  | Min(1%) | 2.272 | 4.474 | 6.238 |
|  | ± Range | 7.526076 | 7.007142 | 7.201833 |

A flow channel unit in which a value close to the CV provided in Table 1 can be obtained is considered desirable for stable liquid feeding.

3-2. Comparative Example 1 (Feeding by Tube Pump)

Fig. 4 illustrates an experimental system (hereinafter, also referred to as an experimental system of Comparative Example 1) to analyze flow rate fluctuation caused by liquid feeding by a tube pump. Same as Reference Example 1, a flow rate sensor was SLS-1500 manufactured by SENSIRION AG, and the shortest interval of flow rate sampling was 1 ms. As the tube, a silicone tube (manufactured by ARAM Corporation) having an inner diameter of 1 mm and an outer diameter of 3 mm was used. Furthermore, a low-pressure fluid fitting (manufactured by Value Plastics, Inc.) was used as a connection connector.

As the tube pump, two types including a large type and a small type were used. The large type was WP1100 (manufactured by Welco Co., Ltd., having four rollers, a tube inner diameter of $\phi 4.8$ mm, and a stepping motor), and the small type was WPM1100 (manufactured by Welco Co., Ltd., having two rollers, a tube inner diameter of $\phi 1$ mm, and a stepping motor). A reason why the stepping motor is adopted instead of a DC motor is to facilitate formation of a constant flow by performing rotation angle control instead of torque control.

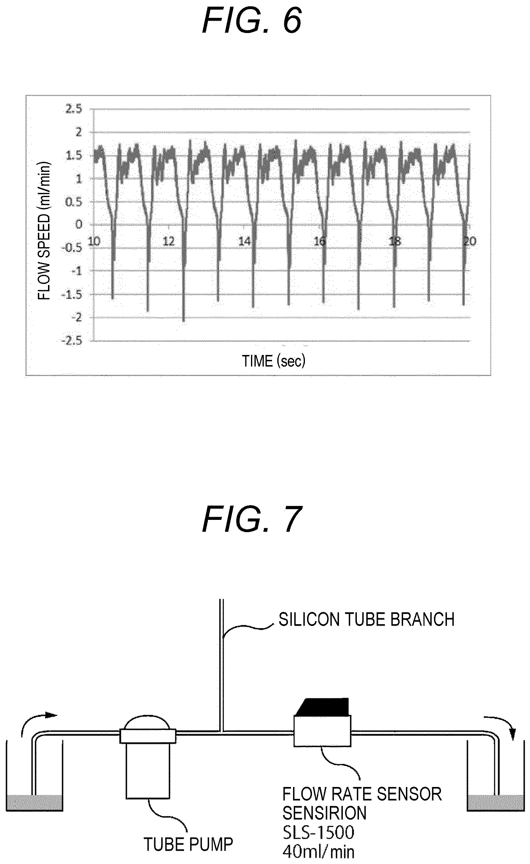

The flow rate was measured in a case of feeding the liquid by the tube pump in the experimental system. Figs. 5 and 6 illustrate waveforms of the flow rates in the cases of feeding the liquid by the large-type and small-type tube pumps. Furthermore, each of TABLE 2 (evaluation results on a pulsating flow caused by the large-type tube pump) and TABLE 3 (evaluation results on a pulsating flow caused by the small-type tube pump) below provides an average value of the flow rate for 60 seconds, a coefficient of variation (CV), a flow rate maximum value - a flow rate minimum (Max - Min), and a fluctuation value relative to the average flow rate in the case of the liquid feeding by these pumps.

[TABLE 2]

| Average | 12.14 | | [ml/min] |
|---|---|---|---|
| CV | 43.64 | | [%] |
| Max-Min | Max (1%) | 20.50 | [ml/min] |
| | Min (1%) | 0.35 | [ml/min] |
| | $\pm$ Range | 82.99 | [%] |

[TABLE 3]

| Average | 0.99 | | [ml/min] |
|---|---|---|---|
| CV | 65.14 | | [%] |
| Max-Min | Max (1%) | 1. 69 | [ml/min] |
| | Min (1%) | -1.04 | [ml/min] |
| | $\pm$ Range | 137.60 | [%] |

As illustrated in Figs. 5 and 6, it can be seen that the flow rate dropped to a negative value or close to zero at regular intervals. This indicates that a reverse flow is even generated when a roller is separated from the tube. Thus, the pulsating flow is generated in the liquid feeding by the tube pump. Furthermore, the CV also exhibits a very high value.

3-3. Comparative Example 2 (Flow Channel Unit Including Flow Rate Fluctuation Suppressing Unit)

An experimental system was prepared by incorporating the flow rate fluctuation suppressing unit to the experimental system of Comparative Example 1. A configuration in which a branched portion was provided on a downstream side of the tube pump as the flow rate fluctuation suppressing unit, and the air was introduced into the branched portion was adopted. Fig. 7 illustrates a schematic diagram of the experimental system having the above-described configuration (hereinafter also referred to as the experimental system of Comparative Example 2). Furthermore, a volume of the air was calculated by a pulsation absorption calculation formula recited in a web page of Japan Accumulator Co., Ltd. (http://www.nacol.co.jp/products/flash/book.pdf). The formula is as follows.

[Formula 1]

$$V_1 = \frac{q \cdot F_1 \cdot \left(\frac{P_x}{P_1}\right)^{\frac{1}{n}}}{1 - \left(\frac{P_x}{P_m}\right)^{\frac{1}{n}}}$$

In the above formula, $V_1$ represents an accumulator gas volume (L), q represents a discharge amount per pump rotation (L/rev), $F_1$ represents a pump discharge count, $P_x$ represents a normal circuit pressure (MPa), $P_m$ represents a

maximum tolerance pulsation pressure, and n represents a polytropic index.

In a case of using a ten-roller tube pump as the pump, results of the pulsation absorption calculation and respective values in the Formula used for the calculation (results of the pulsation absorption calculation and the values used in the calculation) are as provided in Table 4 below.

[TABLE 4]

| Calculation of Accumulator's Pulsation Absorption | | |
|---|---|---|
| Gas Volume | $V_1$ [L] | 0.000110368 |
| Discharge Amount per Pump Rotation | q [L/rev] | 8.33E-06 |
| Pump Discharge Coefficient (Refer to List) | $F_1$ | 0.6 |
| Normal Circuit Pressure | $P_x$ [Mpa] | 0.2 |
| Gas Enclosure Pressure (60% of Px) | $P_1$ [Mpa] | 0.12 |
| Maximum Tolerance Pulsation Pressure | $P_m$ [Mpa] | 0.22 |
| Polytropic Index | N | 1.42 |

According to the above Formula, it was calculated that a gas volume of about 110 $\mu$L was required for the pulsation absorption. Since the silicone tube of the branched portion is the silicone tube of $\phi$1 mm, the branched portion is required to have a length of about 14 cm. Therefore, flow rate fluctuation in each of cases where the length of the silicone tube was set to 15 cm, 25 cm, 50 cm, and 100 cm was analyzed.

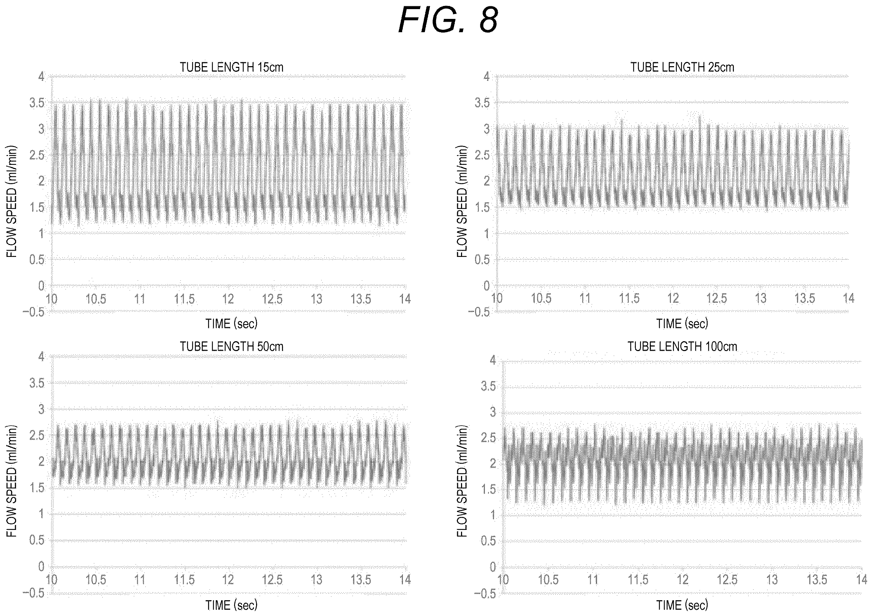

Fig. 8 illustrates a waveform of a flow rate in each of the cases where the length of a silicone tube was set to 15 cm, 25 cm, 50 cm, or 100 cm. Furthermore, TABLE 5 below (evaluation results on the pulsating flow in the case of using the silicone tube) provides an average value of the flow rate for 60 seconds, a coefficient of variation (CV), and a flow rate maximum value - a flow rate minimum (Max - Min).

[TABLE 5]

|  | 15 cm | 25 cm | 50 cm | 100 cm |
|---|---|---|---|---|
| Average | 2.131597 | 2.091352 | 2.088005 | 2.086009 |
| CV | 31.28896 | 21.05188 | 14.49797 | 14.66856 |
| Max | 3.546 | 3.242 | 2.788 | 2.788 |
| Min | 1.134 | 1.42 | 1.504 | 1.214 |

These results indicate that the more increased the gas volume is, the more reduced the CV is, and the effect of suppressing the flow rate fluctuation is enhanced. However, the CV values between the cases where the length of the tube is 50 cm and 100 cm are substantially the same, and the CV values of these cases are higher than the CV values obtained in the above-described Reference Example 1. Therefore, the flow rate fluctuation is not sufficiently suppressed only by the flow rate fluctuation suppressing unit.

3-4. Example 1 (Flow Channel Unit (Tube Pump) of Present Technology)

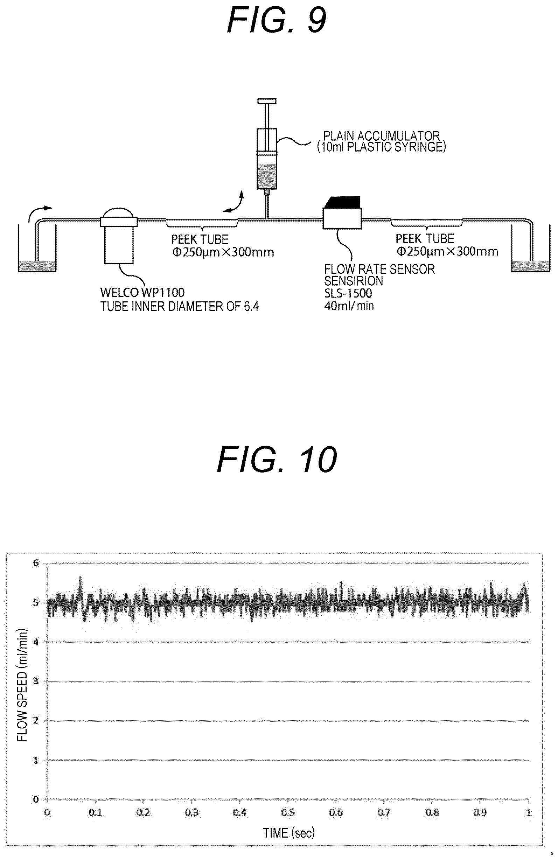

An experimental system (hereinafter also referred to as an experimental system of Example 1) was prepared, in which: a syringe of 10 ml in the experimental system of Comparative Example 2 was used as the flow rate fluctuation suppressing unit, instead of the branched portion of the silicone tube; a flow channel portion in which the cross-sectional area of the flow channel was smaller than the cross-sectional area of a remaining flow channel portion was provided on the upstream side of the flow rate fluctuation suppressing unit and the downstream side of the pump; and a flow channel portion in which the cross-sectional area of the flow channel is smaller than the cross-sectional area of a remaining flow channel portion was further provided on the downstream side of the flow rate fluctuation suppressing unit. A PEEK tube of $\phi$250 $\mu$m $\times$ 300 mm was used as the above-described two flow channel portions each having the small cross-sectional area. Furthermore, WP1100 (manufactured by Welco Co., Ltd. and having a tube inner diameter of $\phi$6.4 mm) was used as the pump. The experimental system is illustrated in Fig. 9.

The flow rate was measured in a case of feeding the liquid by the tube pump in the experimental system. Fig. 10 illustrates the waveform of the measured flow rate. Furthermore, TABLE 6 below (evaluation results on pulsating flow by the experimental system of Example 1) provides an average value of the flow rate for 60 seconds, a coefficient of variation (CV), a flow rate maximum value - a flow rate minimum (Max - Min), and a fluctuation value relative to the average flow rate in the case of the liquid feeding by these tube pumps.

[TABLE 6]

| Average | 5.01 | | [ml/min] |
|---|---|---|---|
| CV | 3.17 | | [%] |
| Max-Min | Max (1%) | 5.37 | [ml/min] |
| | Min (1%) | 4.66 | [ml/min] |
| | ± Range | 7.16 | [%] |

As illustrated in Fig. 10, a flow waveform in which pulsation was eliminated was obtained by using the flow channel unit of Example 1. Furthermore, as illustrated in Table 6, the CV value was 3.17%, and this value was equivalent to that in the case of the pressure liquid feeding in Reference Example 1. From these results, it can be seen that the stable liquid feeding can be performed by the flow channel unit of Example 1.

3-5. Example 2 (Flow Channel Unit of Present Technology (Simulation by Equivalent Circuit))

Pulsating flow removing ability by the flow channel unit of Example 1 was simulated by using an equivalent circuit. In the present simulation, the equivalent circuit was constructed by setting a flow rate as current, a pressure as voltage, a pressure loss as resistance, an inertia term as inductance, and volume expansion per unit pressure as capacitance. L, C, and R of a flow channel portion having the small cross-sectional area were defined and calculated as follows.

$$R = 8\eta l / \pi R^4$$

$$L = \rho l / S$$

C = 2πR × (displacement of an inner wall of a thick cylinder that is opened at both ends applied with a unit internal pressure) × I

From the above Formulas, it can be seen that the smaller a tube diameter is, the larger a resistance value and the inductance become.
Furthermore, capacitance of the flow rate fluctuation suppressing unit was defined and calculated as follows.

C = (volume of water having entered the inside of the flow rate fluctuation suppressing unit)/(pressure of the flow rate fluctuation suppressing unit)

The volume of the water having entered the flow rate fluctuation suppressing unit was calculated by acquiring a gas contraction volume inside the flow rate fluctuation suppressing unit on the basis of the pressure and by using a difference from an atmospheric pressure state. Since the capacitance of the flow rate fluctuation suppressing unit is increased by the pressure, a sufficient pressure loss on the downstream side of the flow rate fluctuation suppressing unit is required. Therefore, it is necessary to provide a flow channel having a small tube diameter.
In the present simulation, the liquid feeding at a flow rate of 5 ml/min by the tube pump is assumed, and transferability when the flow rate fluctuates in this flow rate width is considered. The tube used for the tube pump was assumed to be a silicone tube, and assumed to have a sufficiently large tube diameter, and only the tube capacitance was used in the present simulation. Furthermore, it was assumed that the flow channel having the small tube diameter disposed in a downstream portion was assumed to be a hard material such as the PEEK material and ideally assumed to have no capacitance. Actually, the flow rate fluctuation suppressing unit has the inductance and the resistance, but in the present simulation, it was assumed that the flow rate fluctuation suppressing unit had only the capacitance.

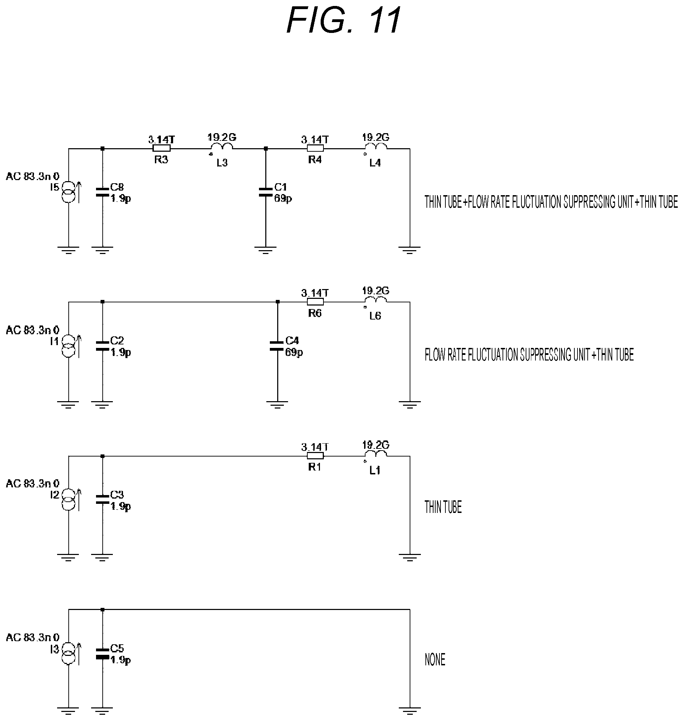

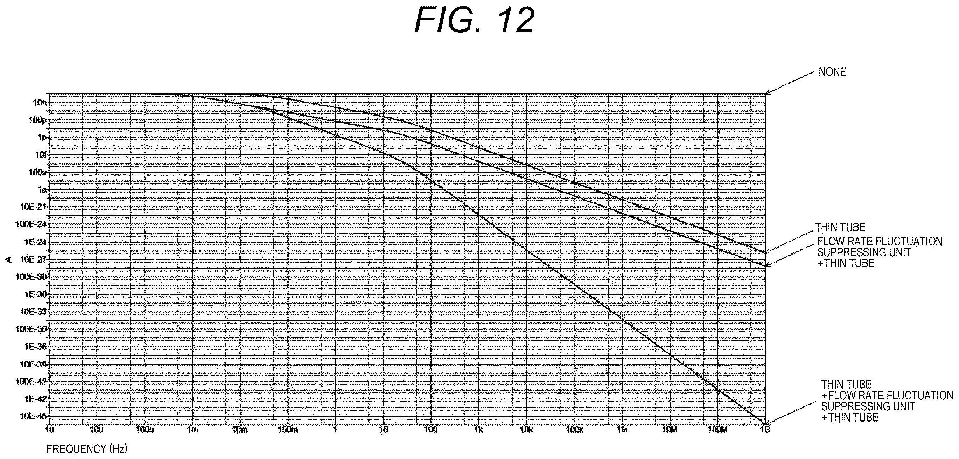

Fig. 11 illustrates, sequentially from above, equivalent circuit diagrams of: a case of including the flow rate fluctuation suppressing unit and including a tube having a small tube diameter on upstream and downstream sides of the flow rate fluctuation suppressing unit; a case of including the flow rate fluctuation suppressing unit and including a tube having a small tube diameter on the downstream side of the flow rate fluctuation suppressing unit; a case of including a tube having a small tube diameter; and a case of including neither the flow rate fluctuation suppressing unit nor a tube having a small tube diameter. Furthermore, Fig. 12 illustrates simulation results of these four cases. From the simulation results, it can be seen that low-frequency response is reduced by including the flow rate fluctuation suppressing unit. Also, it can be seen that frequency response in a high-frequency region is degraded by inserting the tube having the small diameter on the upstream side of the flow rate fluctuation suppressing unit.

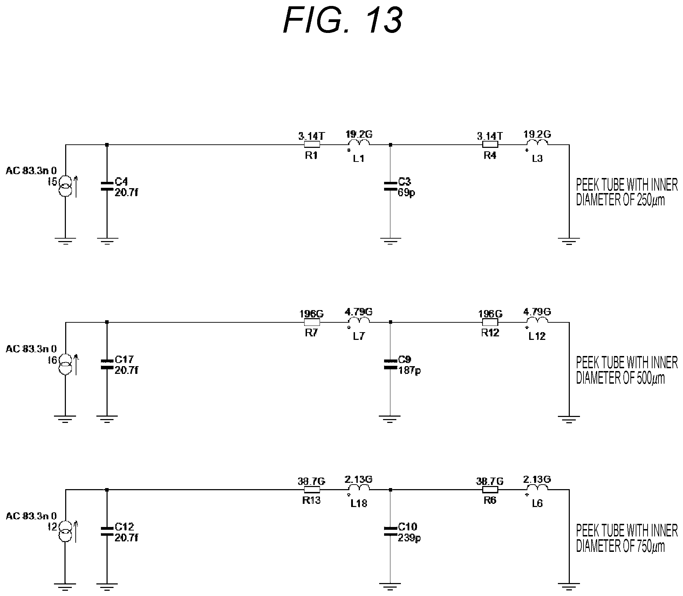

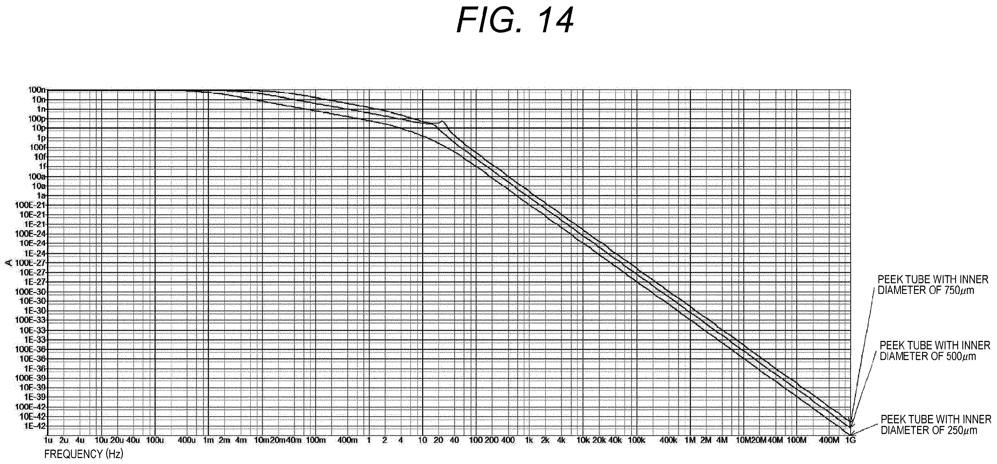

Furthermore, Fig. 13 illustrates equivalent circuit diagrams in cases where a tube diameter of the small tube is changed to 250 $\mu$m, 500 $\mu$m, and 750 $\mu$m. Fig. 14 illustrates simulation results of these three cases. Note that, in these simulations, a tube diameter of a remaining part was assumed as 1 mm. The simulation results shows that, in the case where the tube diameter of the small tube is 250 $\mu$m, a first inflection point is 1 mHz or less. Furthermore, an attenuation amount at 1 Hz is also 1/1000 or less only when the tube diameter is 250 $\mu$m. Therefore, it can be seen that the flow rate fluctuation is more effectively performed by setting the diameter of the small tube to 250 $\mu$m or less.

REFERENCE SIGNS LIST

| | |
|---|---|
| 100 | Flow channel |
| 101 | Container including liquid to be fed |
| 102 | Pump |
| 103 | Device to be supplied with liquid |
| 104 | Branch point |
| 105 | Flow rate fluctuation suppressing unit |
| 106 | Flow channel having cross-sectional area smaller than cross-sectional area of remaining part |
| 107 | Flow channel having cross-sectional area smaller than cross-sectional area of remaining part |
| 108 | Branched flow channel |
| 200 | Microchip |
| 201 | Sample liquid inlet |
| 202 | Sample liquid flow channel |
| 203 | Sheath liquid inlet |
| 204 | Sheath liquid flow channel |
| 205 | Main flow channel |
| 206 | Detection region |
| 207 | Sorting unit |
| 208 | Branched flow channel |
| 209 | Particle sorting flow channel |
| 210 | Branched flow channel end |
| 211 | Particle sorting flow channel end |
| 212 | Gate flow inlet |

**Claims**

1.  A flow channel unit (100) for a microparticle analysis device, the flow channel unit being used to allow liquid to flow through in the microparticle analysis device, the flow channel unit comprising

    a flow rate fluctuation suppressing unit (105) configured to suppress a fluctuation of the flow of the liquid, wherein a first cross-sectional area of at least part (106) of a downstream flow channel of the flow rate fluctuation suppressing unit is smaller than a second cross-sectional area of a remaining part of the downstream flow channel,
    wherein a third cross-sectional area of at least part (107) of an upstream flow channel of the flow rate fluctuation suppressing unit is smaller than a fourth cross-sectional area of a remaining part of the upstream flow channel, the flow channel unit being **characterised in that** it comprises a branched flow channel (108) having a first end and a second end,
    wherein the first end of the branched flow channel is connected to the flow rate suppressing unit, and
    wherein the second end of the branched flow channel is connected to each of the downstream flow channel and the upstream flow channel.

2.  The flow channel unit according to claim 1, further comprising a pump on an upstream side of the flow rate fluctuation suppressing unit.

3. The flow channel unit according to claim 2, wherein the pump is a tube pump, a syringe pump, or a centrifugal pump.

4. The flow channel unit according to claim 1, wherein the flow rate fluctuation suppressing unit includes a gas and suppresses flow rate fluctuation by compression or expansion of the gas.

5. The flow channel unit according to claim 1, wherein the first cross-sectional area of the at least part of the flow channel in the downstream flow channel is 1/10 times or less the small cross-sectional area of the remaining part of the flow channel in the downstream flow channel.

6. The flow channel unit according to claim 1, wherein a cross-section of the at least part of the flow channel in the downstream flow channel and a cross-section of the remaining part of the flow channel in the downstream flow channel are circular or elliptical.

7. The flow channel unit according to claim 1, wherein the cross-section of the at least part of the flow channel in the downstream flow channel and the cross-section of the remaining part of the flow channel in the downstream flow channel are circular, and the first cross-sectional area of the at least part of the flow channel is 1/10 times or less the second cross-sectional area of the remaining part.

8. The flow channel unit according to claim 1, wherein the cross-section of the remaining part of the flow channel in the downstream flow channel is circular, and a tube diameter of the flow channel is 5 mm or less.

9. The flow channel unit according to claim 1, wherein the at least part of the downstream flow channel and the remaining part of the downstream flow channel are connected by a connector.

10. The flow channel unit according to claim 1, wherein the at least part of the downstream flow channel is molded from a member having pressure resistance.

11. The flow channel unit according to claim 1, wherein the liquid flowing inside the flow channel forms a laminar flow containing a microparticle to be analyzed.

12. A microparticle analysis device comprising a flow channel unit (100) according to claim 1.

**Patentansprüche**

1. Strömungskanaleinheit (100) für eine Mikropartikelanalysevorrichtung, wobei die Strömungskanaleinheit verwendet wird, um Flüssigkeit in der Mikropartikelanalysevorrichtung durchfließen zu lassen, die Strömungskanaleinheit umfassend

eine Einheit (105) zum Unterdrücken von Strömungsratenschwankungen, die konfiguriert ist, um eine Schwankung der Flüssigkeitsströmung zu unterdrücken,
wobei eine erste Querschnittsfläche von mindestens einem Teil (106) eines nachgeschalteten Strömungskanals der Einheit zum Unterdrücken von Strömungsratenschwankungen kleiner ist als eine zweite Querschnittsfläche eines verbleibenden Teils des nachgeschalteten Strömungskanals,
wobei eine dritte Querschnittsfläche von mindestens einem Teil (107) eines vorgeschalteten Strömungskanals der Einheit zum Unterdrücken von Strömungsratenschwankungen kleiner ist als eine vierte Querschnittsfläche eines verbleibenden Teils des vorgeschalteten Strömungskanals,
wobei die Strömungskanaleinheit **dadurch gekennzeichnet ist, dass** es einen verzweigten Strömungskanal (108), der ein erstes Ende und ein zweites Ende aufweist, umfasst,
wobei das erste Ende des verzweigten Strömungskanals mit der Strömungsratenunterdrückungseinheit verbunden ist, und
wobei das zweite Ende des verzweigten Strömungskanals mit jedem des nachgeschalteten Strömungskanals und des vorgeschalteten Strömungskanals verbunden ist.

2. Strömungskanaleinheit nach Anspruch 1, ferner umfassend eine Pumpe auf einer vorgeschalteten Seite der Einheit zum Unterdrücken von Strömungsratenschwankungen.

3. Strömungskanaleinheit nach Anspruch 2, wobei die Pumpe eine Schlauchpumpe, eine Spritzenpumpe oder eine Kreiselpumpe ist.

4. Strömungskanaleinheit nach Anspruch 1, wobei die Einheit zum Unterdrücken von Strömungsratenschwankungen ein Gas einschließt und Strömungsratenschwankungen durch Kompression oder Expansion des Gases unterdrückt.

5. Strömungskanaleinheit nach Anspruch 1, wobei die erste Querschnittsfläche des mindestens einen Teils des Strömungskanals in dem nachgeschalteten Strömungskanal 1/10 oder weniger der kleinen Querschnittsfläche des verbleibenden Teils des Strömungskanals in dem nachgeschalteten Strömungskanal beträgt.

6. Strömungskanaleinheit nach Anspruch 1, wobei ein Querschnitt des mindestens einen Teils des Strömungskanals in dem nachgeschalteten Strömungskanal und ein Querschnitt des verbleibenden Teils des Strömungskanals in dem nachgeschalteten Strömungskanal kreisförmig oder elliptisch sind.

7. Strömungskanaleinheit nach Anspruch 1, wobei der Querschnitt des mindestens einen Teils des Strömungskanals in dem nachgeschalteten Strömungskanal und der Querschnitt des verbleibenden Teils des Strömungskanals in dem nachgeschalteten Strömungskanal kreisförmig sind und die erste Querschnittsfläche des mindestens einen Teils des Strömungskanals 1/10 oder weniger der zweiten Querschnittsfläche des verbleibenden Teils beträgt.

8. Strömungskanaleinheit nach Anspruch 1, wobei der Querschnitt des verbleibenden Teils des Strömungskanals in dem nachgeschalteten Strömungskanal kreisförmig ist und ein Schlauchdurchmesser des Strömungskanals 5 mm oder weniger beträgt.

9. Strömungskanaleinheit nach Anspruch 1, wobei mindestens der Teil des nachgeschalteten Strömungskanals und der verbleibende Teil des nachgeschalteten Strömungskanals durch einen Verbinder verbunden sind.

10. Strömungskanaleinheit nach Anspruch 1, wobei mindestens der Teil des nachgeschalteten Strömungskanals aus einem Element, das Druckfestigkeit aufweist, geformt ist.

11. Strömungskanaleinheit nach Anspruch 1, wobei die Flüssigkeit, die in dem Strömungskanal fließt, eine laminare Strömung ausbildet, die ein zu analysierendes Mikropartikel enthält.

12. Mikropartikelanalysevorrichtung, umfassend eine Strömungskanaleinheit (100) nach Anspruch 1.

**Revendications**

1. Unité de canal d'écoulement (100) destinée à un dispositif d'analyse de microparticules, l'unité de canal d'écoulement étant utilisée pour permettre à un liquide de s'écouler à travers le dispositif d'analyse de microparticules, l'unité de canal d'écoulement comprenant

une unité de suppression de fluctuation de débit (105) configurée pour supprimer une fluctuation de l'écoulement du liquide,
dans laquelle une première aire en coupe transversale d'au moins une partie (106) d'un canal d'écoulement en aval de l'unité de suppression de fluctuation de débit est plus petite qu'une deuxième aire en coupe transversale d'une partie restante du canal d'écoulement en aval,
dans laquelle une troisième aire en coupe transversale d'au moins une partie (107) d'un canal d'écoulement en amont de l'unité de suppression de fluctuation de débit est plus petite qu'une quatrième aire en coupe transversale d'une partie restante du canal d'écoulement en amont,
l'unité de canal d'écoulement étant **caractérisée en ce qu'elle** comprend un canal d'écoulement ramifié (108) ayant une première extrémité et une seconde extrémité,
dans laquelle la première extrémité du canal d'écoulement ramifié est raccordée à l'unité de suppression de débit, et
dans laquelle la seconde extrémité du canal d'écoulement ramifié est raccordée au canal d'écoulement en aval et au canal d'écoulement en amont.

2. Unité de canal d'écoulement selon la revendication 1, comprenant en outre une pompe sur un côté en amont de l'unité de suppression de fluctuation de débit.

**3.** Unité de canal d'écoulement selon la revendication 2, dans laquelle la pompe est une pompe à tube, une pompe à seringue ou une pompe centrifuge.

**4.** Unité de canal d'écoulement selon la revendication 1, dans laquelle l'unité de suppression de fluctuation de débit comporte un gaz et supprime une fluctuation de débit par compression ou détente du gaz.

**5.** Unité de canal d'écoulement selon la revendication 1, dans laquelle la première aire en coupe transversale de l'au moins une partie du canal d'écoulement dans le canal d'écoulement en aval vaut 1/10 de fois ou moins la petite aire en coupe transversale de la partie restante du canal d'écoulement dans le canal d'écoulement en aval.

**6.** Unité de canal d'écoulement selon la revendication 1, dans laquelle une coupe transversale de l'au moins une partie du canal d'écoulement dans le canal d'écoulement en aval et une coupe transversale de la partie restante du canal d'écoulement dans le canal d'écoulement en aval sont circulaires ou elliptiques.

**7.** Unité de canal d'écoulement selon la revendication 1, dans laquelle la coupe transversale de l'au moins une partie du canal d'écoulement dans le canal d'écoulement en aval et la coupe transversale de la partie restante du canal d'écoulement dans le canal d'écoulement en aval sont circulaires, et la première aire en coupe transversale de l'au moins une partie du canal d'écoulement vaut 1/10 de fois ou moins la deuxième aire en coupe transversale de la partie restante.

**8.** Unité de canal d'écoulement selon la revendication 1, dans laquelle la coupe transversale de la partie restante du canal d'écoulement dans le canal d'écoulement en aval est circulaire, et un diamètre de tube du canal d'écoulement est de 5 mm ou moins.

**9.** Unité de canal d'écoulement selon la revendication 1, dans laquelle l'au moins une partie du canal d'écoulement en aval et la partie restante du canal d'écoulement en aval sont raccordées par un raccord.

**10.** Unité de canal d'écoulement selon la revendication 1, dans laquelle l'au moins une partie du canal d'écoulement en aval est moulée à partir d'un élément ayant une résistance à la pression.

**11.** Unité de canal d'écoulement selon la revendication 1, dans laquelle le liquide s'écoulant à l'intérieur du canal d'écoulement forme un écoulement laminaire contenant une microparticule à analyser.

**12.** Dispositif d'analyse de microparticules comprenant une unité de canal d'écoulement (100) selon la revendication 1.

# FIG. 1

# FIG. 2

## FIG. 3

FLOW SPEED (ml/min)

FLOW SPEED 300kPa φ0.50-30cm

## FIG. 4

SILICON TUBE HAVING Φ1×3

TUBE PUMP

FLOW RATE SENSOR
SENSIRION
SLS-1500
40ml/min

## FIG. 5

FLOW SPEED (ml/min)

TIME (sec)

# FIG. 6

# FIG. 7

FIG. 8

EP 3 599 456 B1

# FIG. 9

PLAIN ACCUMULATOR
(10ml PLASTIC SYRINGE)

PEEK TUBE
Φ250μm×300mm

PEEK TUBE
Φ250μm×300mm

FLOW RATE SENSOR
SENSIRION
SLS-1500
40ml/min

WELCO WP1100
TUBE INNER DIAMETER OF 6.4

# FIG. 10

# FIG. 11

THIN TUBE +FLOW RATE FLUCTUATION SUPPRESSING UNIT +THIN TUBE

FLOW RATE FLUCTUATION SUPPRESSING UNIT +THIN TUBE

THIN TUBE

NONE

FIG. 12

# FIG. 13

## FIG. 14

FREQUENCY (Hz)

PEEK TUBE WITH INNER
DIAMETER OF 750μm

PEEK TUBE WITH INNER
DIAMETER OF 500μm

PEEK TUBE WITH INNER
DIAMETER OF 250μm

# FIG. 15

**EP 3 599 456 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013238574 A
- JP 2013242156 A
- JP 2009518604 A
- US 20070125436 A1
- WO 2016210077 A1
- JP 2012127922 A
- JP 2014036604 A